# EUROPEAN PATENT APPLICATION

(11) **EP 0 727 736 A2**
(43) Date of publication of application: **21.08.1996**
(21) Application number: 96101840.5
(22) Date of filing: 08.02.1996
(51) Int. Cl.: G06F 9/345, G06F 9/38

(54) **Method and apparatus for efficiently writing results to renamed registers**

(30) Priority: 14.02.1995 US 388606
(71) Applicant: HAL COMPUTER SYSTEMS, INC., Campbell, CA 95008 (US)
(72) Inventor: Tovey, DeForest W., Los Gatos, CA 95030 (US); Shebanow, Michael C., Plano, TX 75075 (US); Gmuender, John, Cary, North Carolina, 27513 (US)
(74) Representative: Liesegang, Roland, Dr.-Ing.

(57) **Abstract**

A method and apparatus stores result data from an execution unit into a physical destination register in a register renaming superscaler microprocessor. The destination register number is associated with the result data and sent to a decoder which decodes the destination register number and enables the destination register corresponding to the destination register number to accept the result data broadcast to the physical destination registers.

## Description

### Related Applications

The subject matter of this application is related to the subject matter of the European patent application entitled "Instruction Flow Control Circuit for Super-Scalar Microprocessor", our reference FB 5785, the European patent application entitled "Addressing Method for Executing Load Instructions Out of Order with Respect to Store Instructions", our reference FB 5787, and the European patent application entitled "Method and Apparatus for coordinating the Use of Physical Registers in a Microprocessor", our reference FB 5786, all of which are filed simultaneously with this application.

### Field of Invention

This invention relates to microprocessors, and more specifically to superscaler microprocessors incorporating register renaming.

### Background of the Invention

Conventional microprocessors process data and instructions in a serial fashion, one at a time. Superscaling microprocessors take the same serial instruction stream, but inside the microprocessor, many instructions are processed simultaneously. This may be accomplished using an instruction set containing one number of registers, and an architecture which contains a larger number of registers. The registers in the instruction set are called "logical registers", and the greater number of registers in the microprocessor are called "physical registers." The microprocessor can thus process data which the stored program has instructed the microprocessor to place into one logical register at the same time as it processes different data which the stored program instructed the microprocessor to place into the same logical register, merely by using two physical registers.

For example, the instruction sequence which loads, increments, and stores two pieces of data:

| | | | |
|---|---|---|---|
| 1 | LD | R1, Mem1 | ;LOAD R1 FROM MEM LOCATION 1 |
| 2 | INC | R1 | ;INCREMENT R1 |
| 3 | STR | R1, MEM1 | ;STORE R1 BACK INTO MEM LOC 1 |
| 4 | LD | R1, MEM2 | ;LOAD R1 FROM MEM LOCATION 2 |
| 5 | INC | R1 | ;INCREMENT R1 |
| 6 | STR | R1, MEM2 | ;STORE R1 BACK INTO MEM LOC 2 |

need not be executed sequentially. For example, while instructions 1,2, and 3 must be executed in that sequence, and instructions 4, 5, and 6 must be executed in that sequence, the second group of three instructions need not follow the first group of three. Therefore the first group of three instructions may use one physical register and the second group of three instructions may use a second physical register, so that each group may execute simultaneously.

Instructions are executed in an execution unit which accepts instructions and any accompanying data, and executes the instruction to produce result data. Many instructions, such as increment the register instructions, have a destination register in which the result data from the execution unit will be stored for subsequent use by another instruction. Because the instruction opcode contains only the logical destination register in which to store the result, the processor must keep track of the physical destination register. Conventional methods of ensuring result data is placed in the proper destination register are described in U.S. Patent number 5,355,457, which discusses the use of CAM's, a device coupled to each destination register which can store a tag and identify a matching tag which is broadcast over a bus.

These conventional methods label the instruction with a unique binary code, or "tag" as the instructions move through the microprocessor for execution. While the instruction awaits execution in one section of the microprocessor, another portion of the microprocessor assigns the physical destination register to that instruction, by writing the instruction's tag into a CAM. After the instruction executes, the result data and the instruction tag are broadcast to all of the CAMs corresponding to each possible destination register. Each CAM listens to the tags broadcast and the CAM which contains the matching tag enables the corresponding register to accept the data. Thus, the result data is written to the register.

Because the tags must be unique, they are often quite large, making the CAMs in which they are stored relatively large, consuming precious space in the microprocessor. Additionally, the speed of execution is reduced while each CAM tries to match the tag broadcast with the tag which it holds.

### Summary of Invention

The present invention associates a physical destination register number with the instruction. When the instruction executes, the register number is sent to a decoder which enables the proper destination register to accept the result data broadcast by the execution unit to all physical registers.

### A Brief Description of the Drawings

Figure **1** is a block schematic diagram of the apparatus according to the present invention which writes data into registers in a register renaming microprocessor.

Figure **2** is a flowchart illustrating one method of the present invention.

### Detailed Description of a Preferred Embodiment

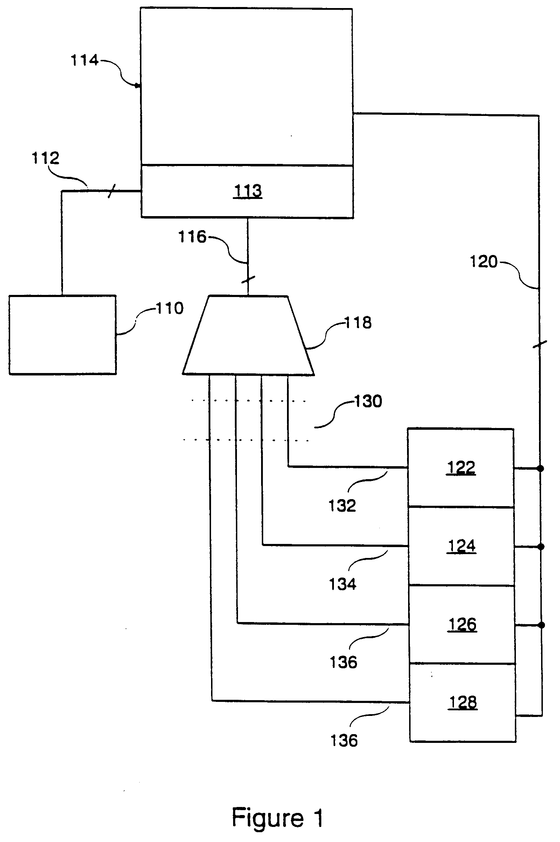

Referring now to Figure **1**, a physical register assignor **110** assigns a destination register to instructions which produce a register result. Not all instructions produce a register result. For example, a load from memory to register instruction produces a register result, but a store from register to memory may not produce a register result. The physical register assignor **110** generates a binary signal at its output **112** representing the physical destination register in which to store the result. The determination of which physical register will be used to accept the result is a subject of the above referenced copending applications, including, "Method and Apparatus for Coordinating the Use of Physical Registers in a Microprocessor."

The binary signal **112** is stored in a storage area **113** of the execution unit **114** which is executing the instruction. In another embodiment, the binary signal **112** is coupled directly to the decoder **118** described below, and is not stored in the storage area **113** of the execution unit **114**. Either before, at the same time, or after, the execution unit **114** completes its execution of the instruction, the storage area **113** of the execution unit **114** outputs the destination register number on a set of output lines **116** coupled to a decoder **118**. The execution unit **114** also sends the result data onto a bus **120** coupled to all of the physical destination registers **122, 124, 126, 128**. In one embodiment, four destination registers **122, 124, 126, 128** are used, although other embodiments may contain other numbers of destination registers. The decoder outputs **130** are coupled to the enable inputs **132, 134, 136, 138** of the destination registers **122, 124, 126, 128** allowing the result data on the bus **120** to be written into the enabled destination register **122, 124, 126, 128**. Because the tag for each instruction typically has a larger number of bits than is required to represent the destination register number, microprocessor space is conserved. Because the load on the bus **120** is only one device instead of all of the registers, speed of storing the result data into the proper register is enhanced.

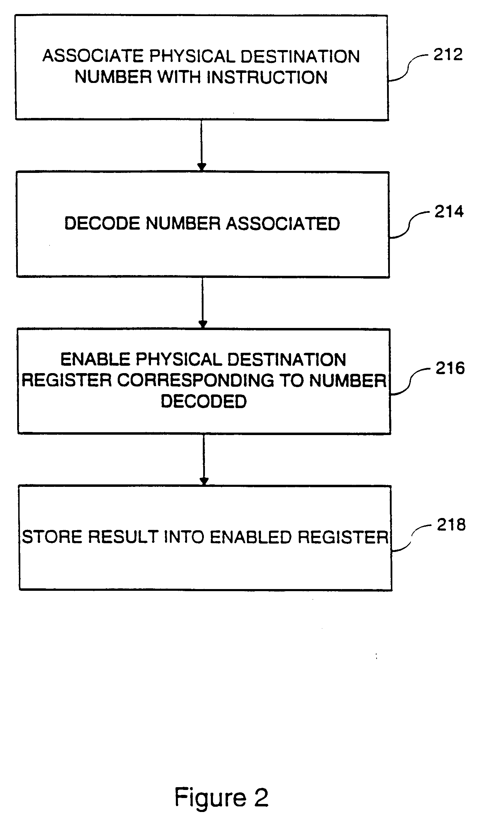

Referring now to Figure **2**, one embodiment of the method of the present invention is shown. The physical destination register is associated **212** with the instruction or the result data. The physical destination register number is decoded **214**, enabling **216** a physical destination register to accept data. The result data is then stored **218** into the enabled physical destination register.

## Claims

1. An apparatus for storing result data produced by a superscaler microprocessor execution unit having a set of result data outputs into one of a plurality of physical destination registers specified by a binary destination register code comprising:
a decoder for decoding the binary destination register code having a set of inputs to accept the binary destination register code and a plurality of outputs, each of the outputs having a first state corresponding to one binary destination register code presented at the decoder input, and a second state corresponding to a remaining binary destination register code; and
a plurality of destination registers each having an enable input having a first state and a second state coupled to one of the decoder outputs, and a set of data inputs coupled to the set of result data outputs of the execution unit, for storing the result data presented at the set of data inputs responsive to the enable input in the first state.

2. The apparatus of claim 1 wherein the execution unit comprises a storage module for storing the binary destination register code, having a set of inputs to receive the binary destination register code and a first set of outputs coupled to the set of decoder inputs.

3. A method of storing result data in at least one of a plurality of physical destination registers having a number corresponding to a coded physical register number, comprising:
decoding the coded physical destination register number to enable at least one of the plurality of physical destination registers having a number corresponding to the coded physical register number to accept the result data; and
writing the result data in the physical destination registers enabled.

4. The method of claim 3 comprising the additional step of storing the coded physical destination register number.

5. The method of claim 4 comprising the additional step of broadcasting the result data to a plurality of the physical destination registers.

6. The method of claim 3 comprising the additional step of associating the coded physical destination register number with the result data.

7. The method of claim 6 comprising the additional step of disassociating the coded physical destination register from the result data.

8. The method of claim 7 comprising the additional step of broadcasting the result data to a plurality of the physical destination registers.

9. The method of claim 6 comprising the additional step of broadcasting the result data to a plurality of physical destination registers.
